Europäisches Patentamt

European Patent Office

Office européen des brevets

(19)

(11) Publication number: **0 164 673**
A2

## (12) EUROPEAN PATENT APPLICATION

(21) Application number: **85106823.9**

(22) Date of filing: **03.06.85**

(51) Int. Cl.⁴: **G 06 F 11/34**

(30) Priority: **15.06.84 US 620980**

(43) Date of publication of application:
**18.12.85 Bulletin 85/51**

(84) Designated Contracting States:
**DE FR GB IT**

(71) Applicant: **International Business Machines Corporation**
**Old Orchard Road**
**Armonk, N.Y. 10504(US)**

(72) Inventor: **Marazas, Gerald A.**
**22145 Serenata Circle W.**
**Boca Raton Florida 33433(US)**

(72) Inventor: **Dixon, Jerry Duane**
**801 Enfield Street**
**Boca Raton Florida 33431(US)**

(72) Inventor: **Merckel, Gerald Ulrich**
**928 Gardenia Drive**
**Delray Florida 33444(US)**

(72) Inventor: **McNeill, Andrew Boyce**
**181 N.W. 41 Way**
**Deerfield Beach Florida 33441(US)**

(72) Inventor: **Bhansali, Mahendra M.**
**8120 Twin Lake Drive**
**Boca Raton Florida 33434(US)**

(74) Representative: **Savi, Camillo et al,**
**IBM Italia S.p.A. Direzione Brevetti MI-SEG-555 P.O.Box 137**
**I-20090 Segrate (Milano)(IT)**

(54) Activity trace collection mechanism for peripheral devices in computer systems.

(57) A trace collection mechanism for recording accesses to a peripheral device (12) having an I/0 cache memory (20), comprises a clock (30) and control means (16). At each access of the memory, the beginning and ending times of the access are stored in a part (28) of the cache memory, together with parameters of the access, such as address and length of accessed data and the type of access. A set of collected data can be analyzed for the operation of both the peripheral device and the central processing program.

FIG.3

Activity trace collection mechanism for peripheral devices in computer systems

The invention relates generally to computer systems. In particular, the invention relates to a mechanism for logging the activity of a peripheral device, in particular a direct access storage device, in computer systems.

Almost all computer systems include random access memory (RAM) which the processor of the system can access, location by location. A large number of computer systems also include a peripheral direct access storage device (DASD). A direct access storage device is generally accepted in the technical community as being any storage mechanism or device which does not have serial access to data. In more general terms, a data storage device can be characterized as a device in which data is accessed through a combination of serial and parallel means. Data is stored in one or more blocks. Data within a block is stored and accessed in a serial fashion. Access to blocks is achieved in a parallel fashion. Within the context of this general definition, all I/O devices can be placed in a spectrum as to the degree of parallel versus serial nature of the access. Random access memory (RAM) is at the end of the spectrum in which the access is entirely parallel to the addressable locations and with the access times which are the most rapid within the spectrum. At the other extreme is a tape device in which the access is entirely serial to the serially stored data and with access times which are the longest in the spectrum. In principle, the present invention can be applied to all devices within the above cited spectrum. In practice, taking into account present technological development, the present invention is most suitable for use with the middle portion of the above spectrum. Accordingly, as used in the following description DASD excludes from the above general definition of DASD those devices which can be characterized as RAM, ROM (ready-only memory), tape or their equivalents. A list of suitable DASD devices includes but is not limited to: magnetic disks, magnetic diskettes, magnetic bubble devices, optical disks and charge coupled devices (CCD's) using commonly accepted definitions for these individual devices. Recently, various types of direct access storage devices have been developed. A hard magnetic disk, generally referred to as disk, provides a relatively fast, high capacity DASD. Another type of disk is the floppy disk or diskette, which generally is slower and has a lower capacity than a hard disk but is considerably cheaper and more compact than the hard disk. Furthermore, a diskette is easily transportable.

Because reading or writing from a DASD is relatively slower compared to the corresponding operation from a RAM, data is usually read in fairly long blocks, and the reading is performed relatively infrequently compared to the computing cycle of the processor.

Systems have been developed to record the accesses to the DASD, primarily to develop billing information for use of the DASD resource. This logging of accesses has been implemented at the software level, either by the application's program or, more typically, by the operating system. In software types of systems, coincident with a DASD read or write, additional programming steps are executed to record the pertinent information about the access. Such access logging is not transparent to the programmer, or at least the systems programmer, because the recording steps must be included within the read or write sequence. Furthermore, the application or systems programmer must provide sufficient data storage for the serial access information. Because the recording is done in separate steps, the recording necessarily consumes additional CPU time.

The conventional access logs have been used almost exclusively for billing purposes. However, the present inventors believe that the access information can be valuable to monitor both the efficiency of the computer program and the health of the serial memory.

Determining a trace of a computer execution has assumed a number of implementations described in the prior art. Price et al, in US-A-3,659,272, describe an instruction-by-instruction trace. Olander et al. in US-A-4,181,965 describe a computer with the capability for a trace that lists each executed line. Smith describes in US-A-3,673,573 a trace of the branch points in a program execution. Farrell et al., in a technical article entitled "Microprocessor Program Trace Control Utilizing I/0 or Memory Mapped Trap Activation" appearing in the IBM Technical Disclosure Bulletin, Vol. 23, No. 11, April 1981 at pp. 4903-4905, describe a trace activated by address and instruction step compares. Fox et al. in US-A-4,075,693 and Brown et al. in a technical article entitled "Diagnostic Trace Mechanism for a Diskette State Controller" appearing in the IBM Technical Disclosure Bulletin, Vol. 23, No. 7B, December 1980 at pp. 3115-3116 describe a mechanism for tracing back from an I/0 device that has suffered a fault interrupt.

However, all these techniques require heavy involvement from the CPU, thus impacting normal operation. In reality, only a trace of disk subsystem requests may be collected without introducing unacceptable distortions in system response time. This preference for a disk subsystem trace is based on the fact that the slower time scale of events at the disk is much more favorable to the trace collection process.

Monitoring of the DASD could be performed in a conceptual scheme in which DASD storage locations are viewed in a common address space with processor main memory. However, the trace data has different statistical properties and must be treated differently according to whether the source is processor main memory or DASD. Additionally, the method of access logging for DASD accesses is far from transparent to operating systems and applications programming when the details are conducted by the operating system or application program.

The invention as claimed provides an improved trace collection mechanism for logging the activity of a peripheral device in computer system. The trace collection mechanism is associated with the peripheral device itself, operates concurrently with the central processor and is transparent to the application and system programs. It is applicable to any I/0 device and most suitable for use with a DASD.

The invention may make a new and expanded usage of the components, otherwise provided in the peripheral device itself for purpose of

- 4 -

ac .ieving the peripheral device cache function. There is an additional
el ment of a clock provided in order to time stamp each operation of the
p. ipheral device.

P< t of the cache memory is used, as desired, for recording accesses to
t. e peripheral device. The times at the initiation and the completion of
t > peripheral device access are recorded. Additional information is
re orded for the source of the request, for example, the type of the
r quest, the location of the request on the peripheral device and the
s atus of the completed request. When the data has been accumulated in
t > cache, it can be statistically evaluated either by the central
p ocessor or by a subsidiary processor associated with the peripheral
< vice. A more complex analysis can be performed upon the sequence of data
f om a large number of accesses.

F g. 1 is a timing diagram for CPU and disk utilization in a single thread
e vironment.

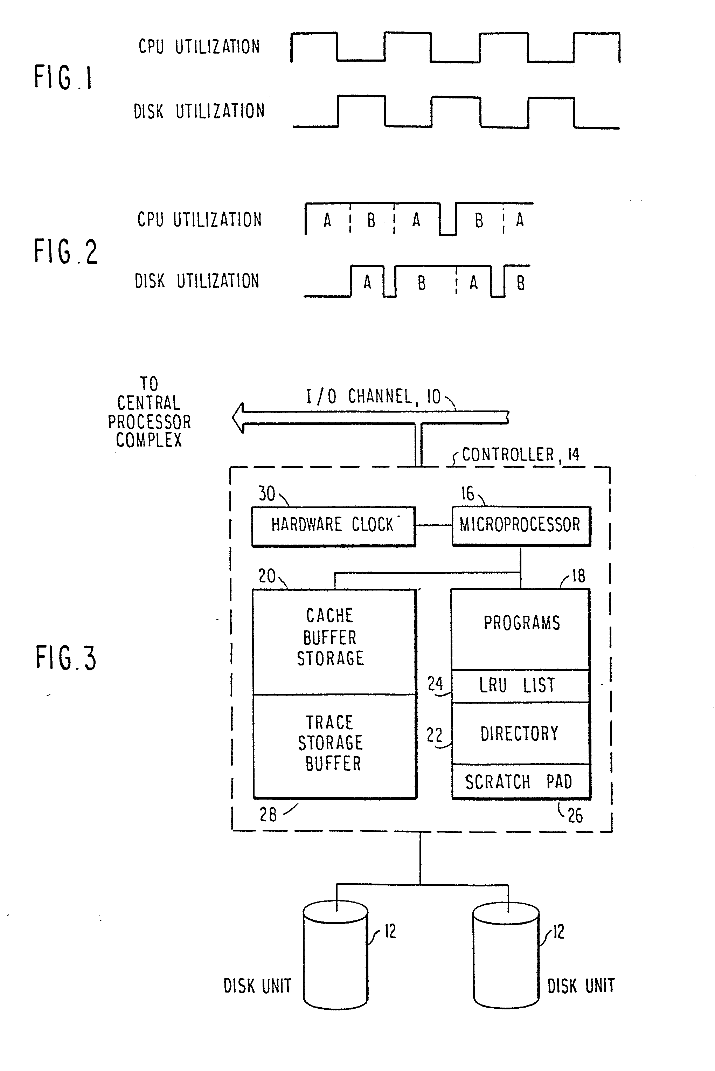

F g. 2 is a timing diagram similar to Fig. 1 but for a multi-thread
e vironment.

F g. 3 is a block diagram of the hardware associated with this invention.

though the invention is applicable to any type of input output devices,
ie following description will make reference, by way of example, to a
isk subsystem. The interplay between the disk subsystem and central
ocessor complex is of decisive importance to a determination of
erformace at the system level. This is true because most applications
re limited in their throughput by processing demand exceeding processing
apability at either the disk subsystem or the central processor complex.
ised on this assessment, there is considerable incentive to improve the
ystem level response time and throughput by securing a better under-
tanding of that interplay. Hopefully, with more knowledge comes the
asis for optimizing system performance.

One significant way of improving system performance is to use disk cache
so as to reduce the response time of the disk subsystem. Disk cache is
described by Dixon et al US-A-4,490,782 (EP-A-0066766) incorporated herein
by reference, and by Marazas in US-A-4,489,378 (EP-A-0066766). Disk cache
is associated with a disk unit. When a record is requested from the disk,
a large number of neighboring records are read into the disk cache. If
subsequent requests are made to the same or neighboring records, they are
immediately available from disk cache without the necessity of a much
slower disk read or write. But even using disk cache leaves untouched
many important factors which remain as obstacles to optimizing system
performance. In the present invention, the disk cache is augmented by
additional hardware and microcode so as to provide a unique and highly
inventive way to address these remaining obstacles to optimization of
system performance.

The key to solving the system performance problem is to quantify the
extent to which a given application environment makes nonefficient usage
of the disk subsystem. Three types of problems will first be described
which degrade the performance of the system use of disk which can be
detected and quantified by use of this invention. The problems are:
(1) data set fragmentation into overflow areas; (2) lack of overlap
between disk and CPU processing; and (3) increased path length per disk
access.

One major example of inefficient usage occurs in a data system when there
is a significant increase in amount of accesses to overflow areas rather
than the primary data set itself. The usage of overflow areas is n
example of data set fragmentation. The need for an overflow area occurs
because the growth in the amount of data to be stored exceeds the size of
the data set area originally allocated. Extra overflow areas are then set
up outside the originally organized blocks for the extra data.

The accesses to the overflow area are bad for at least two performance
related reasons. First, the overflow accesses are contrary to the
sequential patterns of accesses to the primary data set. The overflow accesses thus do not benefit to the optimum extent from the prefetch
mechanism employed for disk cache. Secondly, the overflow accesses tend
to be directed to areas of the disk a large number of cylinders away from
the target area in the basic data set. The overflow accesses thus tend to
require more time to traverse the increased amount of seek distance as the
read head is mechanically moved to the overflow areas.

There may be provided a heuristic tuning algorithm within the disk cache
management system. This heuristic tuning effectively responds to
increases in overflow accesses by reducing the prefetch amount. This
tuning is described in the above cited US-A-4,490,782. Generally, the
prefetch amount is the distance from the end of a block at which
additional blocks are read. The term prefetch is defined in relation to a
scheme for placing disk data transfer records into larger units called
blocks. Typically, an individual request is for one, two, or three
sequentially located records. A block consists of a larger number (such
as eight) of sequentially located records such that the requested records
are contained within the block referred to as the target block. Prefetch,
when it is performed, consists of fetching additional blocks of disk data
located sequentially to the target block. By means described in the above
cited US-A-4,490,782 if prefetching is found to be ineffective at
providing cache hits, then the number of prefetch blocks is reduced. In
the limit that no prefetch is performed, only the requested target block
is accessed. This reaction of the heuristic tuning algorithm thereby
minimizes the lowering of hit ratio caused by higher degree of overflow
accesses. However, the mechanical seek time delays are nonetheless longer
than they would have been without the overflow accesses.

A much better solution, as described later, is to detect the increase in
data overflow accesses. The owner of the data set may then choose to
reorganize the data set. The result of a good reorganization is that data
items previously stored in overflow areas are instead placed in proper
sequence location in an expanded size version of the original data set.
Performance then returns to more favorable levels due to the increased
efficiency of the disk cache with optimum prefetch.

A description of the overlap problem requires some description of the timing of processing and data accessing. In a single programming or single thread environment, as illustrated in Fig. 1, the system time is divided between the CPU and the disk. The CPU calculates for a period before it issues a read or write command to the disk. Once the command has issued, the CPU goes into a wait state, while the disk is accessed to eventually provide the data. Only after the data is provided can the CPU again begin processing. The use of disk cache can reduce the duration of the disk access periods but, nonetheless, the CPU remains idle during the disk access periods which can be quite long for a heavy usage I/O environment.

In order to eliminate this lack of overlap between the CPU and the disk, the system may be set up to process two or more programs concurrently. Fig. 2 illustrates a multi-programming multi-thread system for two tasks A and B. When the CPU ceases processing because of a disk request, the disk begins accessing the requested data and the processor turns to task B. In the illustrated timing, the processing of task B takes longer than the disk access for task A. As a result, the disk goes idle after completing the task A access and awaits the completion of task B processing. Thereafter, the CPU switches back to task A and the disk restarts operation to access task B. If, however, the task B access takes longer than the task A processing, the CPU goes idle awaiting the availability of the disk. Thus the overlap in Fig. 2 is good but not complete since there are periods when the operation of the CPU and the disk do not overlap.

System throughput is enhanced when there is simultaneous usage of both the central processing complex and the disk subsystem. Ideally, applications and operating systems are designed to achieve as much overlap as possible. Toward this goal of high overlap, the operating system employs multi-programming and multi-thread design. Additionally, the application attempts to perform important computations on data acquired from a previous disk access while a present disk access is being serviced at the disk subsystem.

- 8 -

System performance degrades as the degree of overlap is reduced. Such reductions in overlap occurs from a variety of reasons. In a virtual storage system, the multi-programming level may have increased to the extent that current main memory allocation is not sufficient to accommodate the requirements of the working sets for all the various programs scheduled for execution. All programs must be resident in RAM for the tasks which are operating in the multi-thread environment of Fig. 2. As the number of tasks increases, the RAM program memory space or working set space assigned to each program decreases. When parts of a program are sequenced which are not in RAM, a page fault occurs which requires the additional part of the program to be accessed from the disk. As a consequence of inadequate working set space, there is a dramatic increase in page faults which must be satisfied by additional accesses to the paging data set devices.

As viewed from the perspective of the disk subsystem, the increase in page faults means that the idle time spent in the central processor complex increases significantly. The harmful consequence of more time spent in the CPU is an increase in time between accesses directed to the disk subsystem. In turn, there is less overlap when the accesses to the disk are farther apart in time.

In a non-virtual storage system, the data set fragmentation phenomenon can also act to reduce the degree of overlapped processing and reduce the systems throughout. The situation is that longer access times to data overflow areas are required in order to supply requested data to the applications program. As a result, the application program for one task is more likely to finish processing of data acquired from a prior access and be forced to suspend further processing until the present request from another task for data has been satisfied. Viewed from the perspective of the disk subsystem, there is reduced level of central processor activity per disk access.

Another example of a system performance problem is when there is a significant increase in the level of central processor activity per received disk access. Such an increase may be fully justified in light of
a new version of the application in which there is a much higher level of
function provided relative to the disk data.

Unfortunately, there are many occasions in which the increased central
processor activity has little if any justification. In this latter case,
the increased central processor activity is due to a change for the worse
in the implementation of application programming. Large programs are
likely to be undergoing continual revision or maintenance. The operating
system, likewise, is likely to be subject to numerous changes. The full
impact of supposedly minor changes on pathlength is often not adequately
addressed prior to implementation and often the change may cause an
unexpected increase in path length. Pathlength is the number of operations between two points in a process so that pathlength is related to
operating speed by the instruction rate (kips or Mips). System performance is thereby degraded because a larger amount of central processor
time is spent on a work item than is in fact justified by the extent of
the functions performed. The key is to identify when and where there is
an increase in pathlength relative to level of disk activity. Such
changes in pathlength may indicate that the programming implementation has
been poorly changed and need further optimization. In any event, changes
in the balance of usage for system resources between the CPU and the disk
should provide a strong incentive to examine more closely the application
and operating system design.

In all three of the problem areas discussed above, there is the critical
issue involving the balance between service time in the central processor
complex and service time in the disk subsystem. The determination of such
a balance is very easily made if one has available a trace of the sequence
of service requests to one or more of the major processing components of
the system. In principle, a trace of either the central processor
activity or a trace of disk subsystem activity may be used for the desired
analysis.

The hardware necessary for the practice of one embodiment of the invention is schematically represented in Fig. 3. An I/O channel 10 connects the disk system to the central processor. Data to be written into or read from the disk system is transferred over the I/O channel 10. Furthermore, the information necessary for a read or a write request is transferred on the same I/O channel and this information includes items such as the type of request, the source of the request and the location of the requested data on the disk. Two disk units 12 are represented although their actual number is immaterial to the practice of the invention. A disk controller 14 controls the flow of information between the I/O channel 10 and the disk units 12. The controller 14 contains a microprocessor 16 executing programs stored in a memory 18 in order that the controller 14 performs its desired function. The disk controller 14 contains a fast cache buffer memory 20 of the type described in the previously cited patents of Marazas et al and Dixon et al. For the operation of the I/O cache of those applications, the microprocessor has a directory memory 22 which keeps track of the records from the disk 12 currently stored in the cache memory 20. An LRU (least recently used) list is stored in another memory 24 to keep track of which records in the cache memory 20 have not been recently used. The purpose of the LRU list 24 is to determine available space in the cache memory 20 when the microprocessor 16 desires to write an additional block into the cache memory 20. A scratch pad memory 26 is used for whatever calculations the microprocessor 16 needs to perform. What has been described to this point does not differ in significant detail from the I/O controller described in the previously cited patent applications.

For the practice of the invention, there is additionally provided a trace storage buffer memory 28 which is used for recording the trace information generated on each access to the disk system from the I/O channel 10. Although the trace memory 28 may be a separate memory, preferentially the cache memory 20 and the trace memory 28 occupy a single combined memory. Then under program control from the microprocessor 16, the amount of storage may be dynamically divided between the cache memory 20 and the trace memory 28. This common memory may be allocated completely to the cache memory 20, in which case the trace function of the controller is inoperative. Alternatively, the combined memory may be allocated exclusively to the trace memory 28, in which case the caching function of the controller 14 becomes inoperative. Finally, the combined memory may be divided between the cache memory 20 and the trace memory 28 as illustrated in Fig. 3, so that the trace collection proceeds with an operative cache.

There is additionally provided a hardware clock 30. The clock 30 provides the means of time stamping each access. Preferably, the clock 30 resets to zero after each reading. As a result, the time stamp gives the length of time that has elapsed since the last reading of the clock. It is observed that the required time stamps may be obtained with a software idle loop timer rather than a hardware clock.

The decision needs to be made whether to operate the trace collection with or without the concurrent operation of the disk cache. Although the concurrent operation will provide information about the operation of the cache, in fact the size of the cache memory 20 will be necessarily reduced because part of the combined memory will be allocated to the trace memory 28. As a result, the trace collection will not reflect the normally operational state where the combined memory is allocated to the cache memory 20. On the other hand, if the combined memory is allocated completely to the trace memory 28, the trace can be longer and the analysis can attempt to interpret the trace of the disk access as though the full cache capacity was being used. That is, the operation of a disk with an operative cache can be emulated from trace data generated with an inoperative cache.

If the joint or concurrent usage is employed, a typical situation would involve a combined memory capacity of 384 kilobytes with 32 kilobytes allocated to the trace memory and 352 kilobytes allocated to the cache memory 20. If it is assumed that 16 bytes of data are required for each access to record the data to be described later, then the resultant trace can record 2,048 disk accesses. If desired, a longer trace can be collected at the price of further reducing the combined memory allocated to the cache memory 20. The limitations in the size of the trace memory 28 during concurrent operation are based on the desire to maintain the performance of the cache near the levels achievable when the full combined memory capacity is used by the cache memory 20.

The trace collection process is very easily accomplished. For each disk access, the items of data indicated in Table 1 are determined and placed in sequential records in the trace memory 28 by the microprocessor 16. The time to accomplish this data storage is insignificant compared to the total cycle time of each service request to the disk subsystem. Under program control of the microprocessor 16, the trace collection is halted when the data storage capacity of the trace memory 28 is reached. A new trace operation is not initiated until disposition is completed of any trace data presently in the trace memory 28.

TABLE I

DATA ITEMS COLLECTED PER EACH DISK ACCESS

Time stamp 1, taken at start of present access.
Head, sector, cylinder for disk access.
Disk unit number.
Main storage buffer address.
Data transfer amount.
Disk command.
Operation complete status.
Cache hit or miss.
Time stamp 2, taken at end of present access.

The data collected on each disk access includes a time stamp 1 at the beginning of the access and a time stamp 2 at the end of the access. If the hardware clock 30 is reset whenever it is read, then the time stamp 1 indicates the length of time that has elapsed since the previous disk access and time stamp 2 indicates the duration of the present access. The head, sector, cylinder and disk unit number for the disk access provide the beginning address for the requested data, whether it be for a read or a write operation. A disk access request is accompanied by a main storage buffer address. This buffer address differs according to whether the access is a read, a write or other types of accesses such as an indexed access method. The buffer address thus provides information about the type of access. The data transfer amount indicates the number of records requested in the access. The data transfer amount in conjunction with the starting address of the disk access thus provides the information as to which records on the disk were requested in the access. The disk command indicates the type of disk access performed, that is, whether it is a read, a write or another type of access such as a disk scan operation. Although this information is partially redundant to the information available from the main storage buffer address, it is possible that the same main storage buffer address is being used for more than one disk command. The operation complete status indicates whether the request was successfully completed or whether a fault aborted the request. Storing of a status condition is disclosed by Woods et al in US-A-4,091,455. A cache hit or a cache miss indicates whether, in the case of a cache hit, the data requested from the disk was available in the cache memory 20 or, in the case of a cache miss, the requested data was not in the cache memory so that a read or write of a disk unit 12 was required. Of course, when the combined memory is completely allocated to the trace memory 28, there will be no cache hits.

The trace collection is terminated when the trace memory 28 has been filled or, perhaps, when an external decision is made to analyze the available trace data. The analysis of the trace data may proceed along any one of several implementation alternatives, none of which are crucial to the concept of this invention. The trace information in the trace memory 28 may be off-loaded to another medium for a later analysis, perhaps by a skilled systems programmer. Alternatively, a central processor may be notified of the availability of a complete set of trace data. In this case, the central processor would interrupt its normal task and proceed to analyze the trace data. At the end of the trace analysis, the central processor would restart its normal operation and a trace collection would begin anew into an empty trace memory 28. A more attractive alternative is to assign the analysis duties to the microprocessor 16 of the disk controller 14. Typically, the disk microprocessor 16 has enough available idle time that it could devote to a simple trace analysis. Analysis by the disk microprocessor 16 has the advantage that the operation of the trace collection becomes transparent to the central processor, with the exception of perhaps minor decreases in the size of the cache memory 20.

It should be emphasized that the trace data consists of an ordered sequence of data collected for sequential disk accesses. The trace data provide more than running averages of the disk parameters. Valuable information can be derived from comparing the trace data of neighboring accesses and by performing statistical analysis upon the complete set of trace data. Detailed and complete investigation of both the system operation and the disk operation may be derived from a complete evaluation of the entire set of trace data.

Table 2 lists typical analysis items that may be developed by the appropriate reduction of the disk trace.

TABLE 2

ANALYSIS ITEMS DERIVED FROM DISK TRACE

Fraction of zero seeks in cached file system.
Fraction of zero seeks in non-cached file system.
Disk utilization.
Estimate of CPU lead-in path length.
Estimate of CPU overlap with disk.

A zero seek occurs when the disk head does not need to move to begin its disk access, that is, when two sequential disk accesses to the same disk 12 are to the same disk cylinder. When the two sequential cylinder numbers are the same, then there is no seek operation because the seek distance is zero. The seek distance is determined by comparing the cylinder number of the present access to the cylinder number for the previous access to the same disk unit 12. A zero seek is, of course, when these two numbers are the same. The fraction of zero seeks is calculated as the ratio of the number of zero seek accesses to the total number of accesses to the given disk unit. When the trace collection is being performed concurrently with the caching operation, the accesses should be divided into cache hits and cache misses to provide the fractions of zero seeks for a cached record and for a non-cache record.

Disk utilization is determined by the time stamp data. Time stamp 1 is taken at the beginning of the disk access and time stamp 2 is taken at the end of the access. It is further assumed for simplicity of calculation that the hardware clock 30 resets upon being read. The sum of all time stamp 2 readings for a given disk unit 12 is the amount of time in which that disk unit was actually busy. The sum of all time stamp 1 and time stamp 2 readings for all the disk units is the total amount of time in which all the disk units were available for use during the collection of the presently analyzed trace data. The ratio of busy time to total time is the utilization of the given unit. It is further possible to exclude from the time stamp 2 readings the seek times, which would be derived by dividing the seek distances by the velocity of the disk head. The sum of the corrected time stamp 2 readings would then be the total length of time spent in actually reading the disk unit 12 by an already positioned disk head. The specific nature of the correction adjustment depends on whether the disk combines into one command the seek operation with the read/write operation or whether a separate command is issued for the seek followed by a second command for the read/write.

Lead-in pathlength is related to CPU utilization. Trace collection at the disk subsystem can be used not only to determine the disk utilization but to determine the lead-in pathlength as well. However, the determination of the lead-in pathlength of the remote CPU is more complex and requires careful consideration of the system operation.

First of all, assume that the system is a single- thread operation, the
timing of which is generally illustrated in Fig. 1. The sum of the time
stamp 2 readings provides the total disk utilization in Fig. 1 and then
sum of the time stamp 1 readings provides the disk non-utilization.
However, the disk non-utilization period is not equal to the CPU
utilization period. Instead, the typical time stamp 1 reading is composed
of disk seek time, I/O controller processing time, central processor
pathlength time (the item of interest) and application staging time
delays. The disk seek time is included in the time stamp 1 reading
because in the described I/O controller a separate seek command is issued
by the processor to effect the head seek and the seek command does not
effect a trace collection event. An application staging time delay is the
time the CPU is idle because of a lack of input information. For
instance, a CPU can signal a terminal operator that additional input data
is required. The time it takes the operator to respond would be an
application staging time delay. By means of direct measurement or
calculation, the statistical averages of seek time and I/O controller
processing time may be substracted from the value of the given time stamp
1 reading. The resulting time stamp 1 residual is the sum of the desired
central processor pathlength time and an unpredictable application staging
time.

The application staging time contribution is removed in the following
manner. It has been demonstrated in a large number of applications that
about 90% of the time stamp 1 residuals are dominated by the processor
pathlength time. Indeed, for these 90% of the residuals the application
staging time is very nearly zero compared to the pathlength time, the time
that the processor is actually calculating. For the remaining 10% of the
time stamp 1 residuals, the application staging time is a significant
fraction of the residual. Based on this experience, time stamp 1
residuals are calculated for each access recorded in the trace. The
residuals are then sorted according to the size of the residual. The
largest 10% of the residuals are then removed from the trace data because
they are the ones which are shown, on average, to contain a significant
application staging time. The remaining 90% of the residuals are summed and their average is taken as an estimate of the lead-in pathlength in the central processor complex.

An additional assumption is required to be made in order to obtain an estimate from the residuals of the degree to which the operation of the CPU overlaps with the operation of the disk. It is assumed that in a non-overlapped single thread environment (as illustrated in Fig. 1) there is a minimum pathlength necessary to issue two back-to-back disk requests. This minimum time is generally known for each operating system written to operate upon the particular central processor. For this derivation, the 50% of the largest time stamp 1 residuals remaining after the 10% described above are thrown out are also thrown out. Then each of the 50% smallest time stamp 1 residuals is compared against the given minimum value of the pathlength time between adjacent disk service request. Overlap to some degree is declared to exist for each of the time stamp 1 residuals which is less than the minimum pathlength figure. It has been found that typically 5% to 20% of the residuals will show evidence of overlap.

The above description of the analysis for the lead-in path length and the processor/disk overlap was based on an assumption of single thread operation, as illustrated in Fig. 1. However, if multiple tasks are being executed in a multi-thread environment, as shown in Fig. 2, the analysis becomes more complex. Before the lead-in pathlengths are calculated, the accesses from the different tasks must be identified in the trace data. This identification can be based upon which tasks are assigned the requested data locations on the disk.

It is observed that the calculation of the zero seek fraction and of the disk utilization is easily within the capabilities of the microprocessor 16 provided within the disk controller 14. Furthermore, the calculation and examination of the time stamp 1 residuals is also an anaylsis task which may be assigned to the disk microprocessor 16. While these time stamp 1 calculations are extensive and time consuming, they can be done as a low priority task executing when the disk microprocessor would otherwise be idle.

**Claims:**

1. In a controller (14) which couples a peripheral device (12) to a data processor, an activity trace collection mechanism comprising a storage mechanism (28) for storing information relating to the activity of said peripheral device, clock means (30) and a trace control mechanism (16) coupled to the storage mechanism (28) and the clock means (30) and operative during the normal operation of the controller (14) and peripheral device (12) for storing in said storage mechanism (28) the starting and ending times of each peripheral device operation and at least one other parameter defining the nature of each said peripheral device operation, said times being derived from said clock means (30).

2. A trace collection mechanism as recited in claim 1, wherein said peripheral device (12) includes a direct access storage device and said trace control mechanism (16) stores at least two parameters defining the limits of data accessed in said direct access storage device.

3. A trace collection mechanism as recited in claim 1 or 2, further comprising an I/O cache memory (20)for serving as intermediate storage between said peripheral device (12) and said processor.

4. A trace·collection mechanism as recited in claim 3 wherein said storage mechanism (28) and said cache memory (20) occupy a common memory device and said trace control mechanism (16) further comprises means for dynamically allocating storage on said memory device between said storage mechanism (28) and said cache memory (20).

5. A trace collection mechanism as recited in any previous claim, wherein said trace control mechanism (18) further comprises means for analyzing the operation of said data processor from said times and said parameters stored in said storage mechanism (28) for a plurality of peripheral device operations.

6. A trace collection mechanism as recited in claim 5, wherein said analyzing means include means for determining the elapsed time between the starting time and the ending time of a plurality of peripheral device operations, summing said elapsed times, and comparing said summed elapsed times to a total elapsed time during which said starting and ending times are being stored.

7. A trace collection mechanism as recited in claim 6, wherein said analyzing means includes means for determining the elapsed time between the ending time of a peripheral device operation requested by a task in said processor and the starting time of the next peripheral device operation from the same task.

8. A trace collection mechanism as recited in claim 7, wherein said determining means further determines which of said elapsed times exceed a limit statistically determined from a plurality of elapsed times.

9. A trace collection mechanism as recited in claim 5, wherein said trace control mechanism (16) and said analyzing means are both included in a microprocessor.

1/1

**FIG.1**

CPU UTILIZATION

DISK UTILIZATION

**FIG.2**

CPU UTILIZATION

| A | B | A | B | A |

DISK UTILIZATION

| A | B | A | B |

**FIG.3**

TO CENTRAL PROCESSOR COMPLEX

I/O CHANNEL, 10

CONTROLLER, 14

30 — HARDWARE CLOCK

16 — MICROPROCESSOR

20 — CACHE BUFFER STORAGE

18 — PROGRAMS

24 — LRU LIST

22 — DIRECTORY

SCRATCH PAD

TRACE STORAGE BUFFER

28

26

12

12

DISK UNIT

DISK UNIT